# EUROPEAN PATENT APPLICATION

(11) **EP 4 478 235 A1**
(43) Date of publication of application: **18.12.2024**
(21) Application number: 23179296.1
(22) Date of filing: 14.06.2023
(51) Int. Cl.: G06F 30/12, G06F 30/23, G06F 30/17, G06F 30/15, G05B 23/02, F03D 1/00, F03D 17/00, G06F 113/06, G06F 119/02, G06F 119/04

(54) **METHOD FOR MODELLING A COMPONENT WITH A DEFECT**

(71) Applicant: Siemens Aktiengesellschaft, 80333 München (DE)
(72) Inventor: Kördel, Martin, 81369 München (DE); Narasimhachary, Santosh, Charlotte, 28273 (US); Sripragash, Letchuman, Charlotte, 28273 (US)
(74) Representative: Siemens Patent Attorneys

(57) **Abstract**

A method for modelling a component (1) is provided, the component (1) having at least one defect (10) within a defect area (1a),
wherein the method comprises the following steps:
f) providing a reference data set with a reference geometry (RG) for a reference component without the defect (10),
g) providing a point cloud (PC) characteristic of the geometry of the defect (10),
h) generating a defect polyhedron (DP) from the point cloud (PC), the defect polyhedron (DP) approximating the volume of the defect (10), wherein the defect polyhedron (DP) is an implicit representation of the defect (10), defined by a scalar field, in particular a distance field, and
i) deriving a solid model (SM) for the component (10) by subtracting the defect polyhedron (DP) from the reference geometry (RG).

Furthermore, an apparatus (20) and a computer program product for carrying out such a method are provided.

## Description

The present invention relates to a method for modelling a component, the component having at least one defect within a defect area, wherein a data set with a reference geometry for a component without the defect is provided and a data set characteristic of the defect is provided. The invention further relates to an apparatus and a computer program product for carrying out the method.

The design of mechanical components increasingly relies on simulations of physical properties, e.g. load analyses carried out for proposed geometries. However, real components do not always have the ideal geometry developed by the product designer because of unwanted defects. Such defects can either develop during use of the component or they can already be present as an unwanted structural feature arising from the manufacturing process, such as a casting void. Some designers have therefore started to consider possible defects in the simulations used in the design phase. One known method is to use statistical information on the typical with, height and depth of a defect region which has been characterized in similar components which have previously been manufactured. The modelling is then based on a modified geometry, where an ellipsoid with the corresponding size parameters is subtracted from a reference data set, which describes the reference geometry without the defect. This procedure can be repeated for different defect sizes and/or different defect locations, and in this way the load analysis can be carried out for components with typical defects, so that a suitable safety margin can be derived for the component geometry. This way it can be ensured in the design phase that the required specifications are met even if some typical defects are present in the real component.

An advantage of this statistical approach is that due to the use of ellipsoid defect geometries, the computational effort for obtaining a geometrical data set including a defect is relatively low. However, a drawback is that the consequences of the particular complex shape of a certain defect are not considered in the simulations. In a real-life component, defects often have non-ellipsoid shapes, and the influence of the defect shape on the mechanical properties of the component is not negligible.

It is therefore a goal of the present invention to provide a method for modelling a component with a defect by using more detailed defect information. In particular, this is to be achieved without prohibitive computational effort. Another object is to provide an apparatus and a computer program product for carrying out such a method.

These objects of the invention are achieved by claim 1 with respect to the modelling method, by claim 14 with respect to the apparatus and by claim 15 with respect to the computer program product.

The method according to the invention is a method for modelling a component, the component having at least one defect within a defect area. The method comprises the following steps:
a) providing a data set with a reference geometry for a reference component without the defect,
b) providing a point cloud characteristic of the geometry of the defect,
c) generating a defect polyhedron from the point cloud, the defect polyhedron approximating the volume of the defect, wherein the defect polyhedron is an implicit representation of the defect, defined by a scalar field, in particular a distance field, and
d) deriving a solid model for the component by subtracting the defect polyhedron from the reference geometry.

In other words, the reference geometry is the ideal geometry or target geometry of the component design, which does not include any unwanted defects. This ideal geometry can for example be provided in the form of a typical CAD (computer-aided design) data set, e.g. based on boundary representations. In the subsequent steps b) to d), the information for at least one defect is added. If more than one defect type is to be considered, these steps b) to d) can also be repeated several times, e.g. for different defect sizes, shapes and/or locations.

In step b), the input data for characterizing the defect (in particular its size and shape) are provided in the form of a point cloud. A point cloud is a discrete set of data points in three-dimensional (3D) space, in particular with an unorganized spatial structure. Such point clouds can for example be generated by 3D scanners with standard software. In other words, the point cloud can be derived from a physical measurement of a real defect. This can for example be an existing defect in the actual component to be modelled. This can be useful to estimate the residual lifetime of a component where a defect is already present. Alternatively, data from previous measurements on similar components can be used to represent the size and shape of an anticipated future defect of a new component design during the design phase. This way, a data base with the results of previous defect measurements can be used to obtain geometrical information on typical defects that can be expected to form in a planned future component as well.

In step c), a defect polyhedron is derived from the point cloud. In particular, this defect polyhedron is obtained as an implicit representation of the defect. A polyhedron is a three-dimensional shape with flat polygonal faces and straight edges bordering these faces. The corners at the end of these edges are also referred to as vertices. Compared to the ellipsoids used in the previously described method, a polyhedron has the advantage that the defect shape can be modelled in much greater detail. The exact level of detail depends on the number of faces, edges and vertices of the polyhedron. These numbers can be chosen according to the required level of detail and the available computational resources.

An "implicit representation" of a geometry is a function-based geometrical model, in which a mathematical function is used to describe a scalar field, often a signed distance field. In contrast to the boundary representations used in typical CAD data sets, an implicit representation uses the change in the sign of a scalar field to differentiate between the inside and the outside of the geometrical body that is to be described. The use of such implicit representations has many advantages, as described in https://www.ntop.com/resources/blog/how-implicits-succeed-where-b-reps-fail/ and https://www.3dcadworld.com/implicit-modelling-for-complex-geometry/. For example, answering the so-called containment question (the question whether a given point is inside or outside of the relevant object) is much more robust for implicit models, because there are no issues with counting the crossings of tangential lines. There are also no issues with topology changes when offsetting boundaries of an object, and Boolean operations can be handled very smoothly, even when operations on objects with very different levels of spatial detail are concerned.

In the context of the present invention, the use of an implicit representation for the defect polyhedron is advantageous because the geometry of the polyhedron can then easily be built from smaller sub-structures without causing convergence issues during the build step for the new structure. Such convergence issues often occur when using boundary representation or mesh representations for more complex geometries, especially when some of the vertices are close to each other. Such convergence issues do not occur when the defect polyhedron is defined in an implicit manner. The above-mentioned sub-structures from which the polyhedron is assembled can for example be two-dimensional polygons, as explained in more detail below. In this case, an implicit representation of the polygons can be used, and the defect polyhedron can be assembled by using an overall scalar field based on these two-dimensional polygons. The higher the number of vertices in the defect polyhedron and therefore the larger the level of geometric detail in describing the defect, the more advantageous the use of an implicit representation of the defect geometry will become.

Overall, in step d) a solid model of the component with the defect is obtained by subtracting the defect polyhedron from the reference geometry. If the defect is a void, the final solid model can already be obtained from this subtraction step. Otherwise, the void obtained from the subtraction can be filled with another material, e.g. if the defect is a crystallization defect within an otherwise amorphous material or an impurity, i.e. an inclusion of another material that is different from the bulk material of the component.

A key advantage of the method according to the invention is that the shape of an existing or anticipated defect can be considered in much more detail compared to the conventional method of approximating the defect by an ellipsoid. When a suitable choice for the number of vertices of the polyhedron is made, the computation effort can still be manageable. This is particularly the case when an implicit representation of the defect polyhedron is used. As a result, more reliable estimations of physical properties of components with one or more defects can be obtained from a subsequent simulation step.

Besides the above method, the invention relates to an apparatus for modelling a component. The apparatus comprises a processing unit and a memory unit communicatively coupled to the processing unit, and the apparatus is configured to perform the method according to the invention. Furthermore, the invention refers to a computer program product with program code, which is stored in machine-readable form on a medium, for carrying out a method according to the invention or one or more preferred embodiments of the invention when the program code is executed on a computer. The advantages of the apparatus and the computer program product correspond to the advantages described above for the method according to the invention.

Advantageous configurations and embodiments of the method according to the invention follow from the claims dependent on claim 1 as well as the following description. The advantageous features of the method, the apparatus and the computer program product can generally be interchanged and combined.

According to a generally preferred embodiment, the solid model derived in step d) can also be obtained as an implicit representation. In order to achieve this, the reference geometry can be provided as an implicit representation before the subtraction step.

According to a first preferred variant of this embodiment, the reference data set provided in step a) can be provided as an implicit representation of the reference geometry. In this case, the subtraction within step d) can be carried out without any further data conversion within the implicit model.

According to a second preferred variant of this embodiment, the reference data set can be provided as a CAD data set. This CAD data set can in particular comprise boundary representations, wire-frame, surface, volume and/or mesh data. This CAD data set can then be converted to an implicit representation of the reference geometry in a subsequent step which takes place before the subtraction within step d). In either case, the resulting solid model obtained from the subtraction is also advantageously an implicit model, and the above-mentioned advantages of implicit modelling apply to the whole procedure of combining the reference geometry with the defect geometry to obtain the geometry of the actual component with the defect. For such Boolean operations it is generally very favorable to remain within an implicit representation, as explained in the two white papers cited above.

According to a generally preferred embodiment for step b), the point cloud can be obtained from a physical measurement of the defect area. In a first variant, this can be the defect area of the actual component to be modelled. This variant is preferred if a defect already exists on a real component, and a geometrical model is to be derived, for example to simulate physical properties of the component with the existing defect, in particular to determine whether the component still fulfills the specifications and/or to estimate the remaining product lifetime. This variant can also be applied to estimate the safety margin for fulfilling the specifications for a component which has already been manufactured a number of times so that physical measurements for this component design are already available.

According to a second variant of this embodiment, the physical measurement can be carried out on the defect area of a similar component, i.e. a component with a different reference geometry. If the safety margins for a proposed new design are to be evaluated, a data base with measured defects from similar components (e.g. from previous product cycles) can be used for modelling the newly designed component with typical defects.

In any case, no matter if the same component (with the same reference geometry) or a similar component (with a different reference geometry) is measured, the physical measurement can also be performed a plurality of times, e.g. on different realizations of the same design, where the components comprise defects with different sizes, shapes and/or locations. This way, a data base with different typical defects can be generated. If several of those defects are to be modelled (e.g. to estimate the influence of their size and/or location), steps b) to d) can be carried out several times, for example once for each measured defect.

Generally, the physical measurement of the defect area can for example be an optical measurement, e.g. a scan with an optical camera, optionally combined with an optical microscope. According to another example, an X-ray computed tomography (CT) measurement can be used to derive the point cloud characterizing the defect geometry. In principle, any type of physical measurement which provides geometrical data of a defect (such as a void or an inclusion with different material) can be used for this purpose.

Generally, the at least one defect of the component to be modelled can be either a manufacturing defect or a damage developed during use of the component. A manufacturing defect is a deviation from the reference geometry which already occurs during the manufacturing step, such as an unwanted void generated during casting or a crack developed during a thermal step. If the defect is a void, the subtraction of the defect geometry in step d) already results in the final geometry of the component with the defect. On the other hand, if the defect volume contains another material (different from the surrounding bulk material of the component), step d) can comprise the following optional step:
dl) filling the volume of the defect polyhedron with a further material.

According to a generally preferred embodiment, the generation of the defect polyhedron in step c) comprises subdividing the point cloud into a plurality of parallel slices. For each of these slices, a cross-sectional polygon is determined, and the defect polyhedron is obtained by connecting the cross-sectional polygons from the individual slices. In particular, corresponding vertices of the set of cross-sectional polygons can be connected with each other. This approach is particularly advantageous for deriving the polyhedron in an automated or semi-automated fashion without requiring large computational resources. The resources required for generating the polyhedron and also for subsequently generating and handling the final solid model of the component with the defect depend critically on the number of slices used and also on the number of vertices for the polygons corresponding to each slice. Advantageously, the number of slices can be between 2 and 1000, particularly favorably between 2 and 100. Even when using just two slices and therefore two parallel polygons, the accuracy of the geometry of the defect can be improved compared to using an ellipsoid. On the other hand, the computational effort is still manageable when using a slice number within the given range. Similarly, the number of vertices per polygon also influences the accuracy and the required resources. Here, a favorable range is between 3 and 30 vertices per polygon. According to a generally preferred embodiment, the number of vertices is identical between all the parallel cross-sectional polygons. In addition, some or even all of the corresponding sides of those equal-cornered polygons can be parallel in space for the stack of cross-sectional polygons. In this case, the individual polygons are similar in the sense that their corresponding internal angles are the same for the whole set (though their shapes do not necessarily have to be the same, if the number of vertices is 4 or higher).

The number of polygons in the stack and/or the number of vertices per polygon can in principle be set automatically by an overall automatic modelling algorithm used for the generation of the defect polyhedron in step c). Alternatively, there can be a manual interaction where one or both of these number are set by a user, depending on the trade-off between required geometrical accuracy, complexity of the shape of the point cloud and available resources. In case such a manual setting is used, this can in particular be the only manual user interaction within an otherwise automated algorithm for generating the defect polyhedron.

According to a generally preferred variant for determining the orientation of the slices, all the parallel slices can be chosen orthogonal to the longitudinal axis of the point cloud. Here, the "longitudinal axis" is understood to be the one of the (typically three) principal axes of inertia for the plurality of (equally weighted) points, which is associated with the lowest overall second moment of area and therefore typically the longest extension of the point cloud along this axis. For this embodiment, the determination of the individual slides can be preceded by finding the longitudinal axis of the point cloud, which can be done by known algorithms. Then a stack of parallel slices can be determined by sub-dividing the length of the point cloud into a pre-determined number of parallel slices. This "length of the point cloud" along the longitudinal axis does not necessarily have to include all available points. Instead it is sufficient to include a certain pre-defined ratio (e.g. 90% or 95% of the available points), so that far outliers do not disturb the computation.

Once the stack of parallel slices is determined, a next step can be the determination of the polygon for the so-called "major cross section". In this context, the "major cross section" shall be the slice with the largest second moment of area of all the points within the associated slice volume, with respect to the above-mentioned longitudinal axis. In other words, it is the slice with the largest effective extension of the points within the slice. It is particularly advantageous to determine a suitable number of vertices for the polygon corresponding to this major cross section and then to keep this number fixed for all the slices in the stack, i.e. for all cross-sectional polygons. Additionally, the inner angles of the polygons in the stack can also be kept the same as the inner angles of the polygon determined for the major cross section. In this variant, all the polygons in the stack can have their corresponding sides running parallel to each other. With this similarity of the individual polygons (in vertex number and angles), the computational effort for modelling the defect can be kept relatively low.

Generally, each cross-sectional polygon can be a planar polygon. Each planar polygon can in particular represent an envelope of the fraction of the point cloud within the respective slice volume. This "envelope" can either encompass all the points within the respective slice or a certain percentage (e.g. 90% or 95%), again to limit the influence of far outliers on the model. Particularly favorably, each of these envelope polygons can be a convex polygon, in other words a polygon where all inner angles are not larger than 180°. It is particularly easy to determine a convex envelope polygon with a pre-determined number of vertices for an ensemble of points in a given slice volume by an automated algorithm.

According to another preferred embodiment, the overall defect polyhedron can generally have the freedom to comprise one or more concave portions. This can particularly be the case even if the individual cross-sectional polygons, form which the defect polyhedron is built, are all convex. In other words, the concave shape can be associated with one or more concave portions in a longitudinal cross-section of the defect polyhedron (e.g. a cross-section comprising the above-mentioned longitudinal axis). The freedom to have concave portions in this direction arises from the fact that along the stack of cross-sectional polygons, the inner polygons can have a smaller area than the outer polygons. The size of the polygons can also grow and shrink several times along the stack such that convex and concave portions can alternate along the longitudinal axis.

This embodiment, which allows one or more concave portions in the defect polyhedron, is particularly advantageous for modelling a complex defect geometry, which deviates a lot from an ellipsoid overall shape, while still using a simple and (at least largely) automated algorithm.

According to a further generally preferred embodiment, independently of how the defect polyhedron is derived, the method can comprise the additional step of
e) performing a simulation of one or more mechanical properties of the component based on the solid model derived in step d), in particular by using a discrete mesh derived from the solid model.

In other words, the obtained model of the component with the defect can be used to simulate the consequences of the defect on at least one mechanical property. The mechanical property in question can in particular be a non-geometrical property, such as a mechanical stability and/or response to mechanical stress. The simulation can in other words comprise a load analysis. Such a mechanical simulation can for example be based on a numerical discretization method such as the finite element method (FEM) and/or finite volume method and/or finite difference method. Such a discretization method usually requires a mesh representation of the modelled geometrical body as input data. A mesh representation of the component with the defect can easily be generated from the solid model derived in step d).

The result of such a simulation can for example be used to predict the residual lifetime of a component, in which a real defect is already present. The relatively accurate modelling of the shape of such an existing defect then helps to obtain a reliable information on whether or not the component still fulfills the specifications and particularly how long it is expected to remain doing so. Alternatively or additionally, the results of the physical simulation and/or the geometrical model of the defect itself can be used to plan a potential repair of the component. Such a repair can in particular involve an additive manufacturing method for filling an unwanted void in a component. In this case, the mechanical simulation can also be used to predict whether the repaired component will fulfill the required specifications (and optionally also for how long).

Additionally or alternatively, the result of the mechanical simulation can be used to assist one or more decisions during the design of the component. In this case, the defect is usually not an existing defect on a real component but rather a defect which for example is anticipated to develop during use or to originate during manufacturing of the component. Here, a simulation with typical defects in critical locations of the component can help to assess whether safety margins can be met even if such defects are present. The data on the relevant defect geometry (or geometries of several typical defects) can then for example be obtained from a data base of measurements on similar components which have previously been manufactured by similar processes.

Generally, the simulation can be based on a wear model, such that the effect of wear during use of the component on the mechanical properties can be predicted, and a lifetime of the component can be estimated.

According to a generally preferred embodiment for the type of component, the component can be a part of a machine and in particular a component of a turbine. For example, the turbine can be a gas turbine or a wind turbine, and the component can be a blade or a vane of such a turbine. However, this is only one favourable example, and the method can in principle be used to model any components, in particular such components which need to fulfill certain mechanical specifications during use (so-called mechanical components).

According to a particularly preferred embodiment of the apparatus, the apparatus can also comprise a measurement unit for performing the above-mentioned physical measurement of the defect area of the component. However, this is not necessary, as the geometrical data can also be obtained from measurements obtained elsewhere, e.g. from a data base with typical defects measured on similar components.

Further advantages and details of the invention may be found in the exemplary embodiments described below and in the drawings, in which:
- Figure 1: shows a schematic representation of a component and its defect area,
- Figure 2: shows a defect polyhedron generated to model the shape of a point cloud representing the defect,
- Figure 3: shows how a solid model of the component with the defect is generated,
- Figure 4: shows an overall view of the generated solid model and corresponding mesh data,
- Figure 5: shows a schematic illustration of the longitudinal axis and the major cross section of a defect point cloud,
- Figure 6: shows a more complex defect polyhedron, and
- Figure 7: shows a schematic view of an apparatus for carrying out the method.

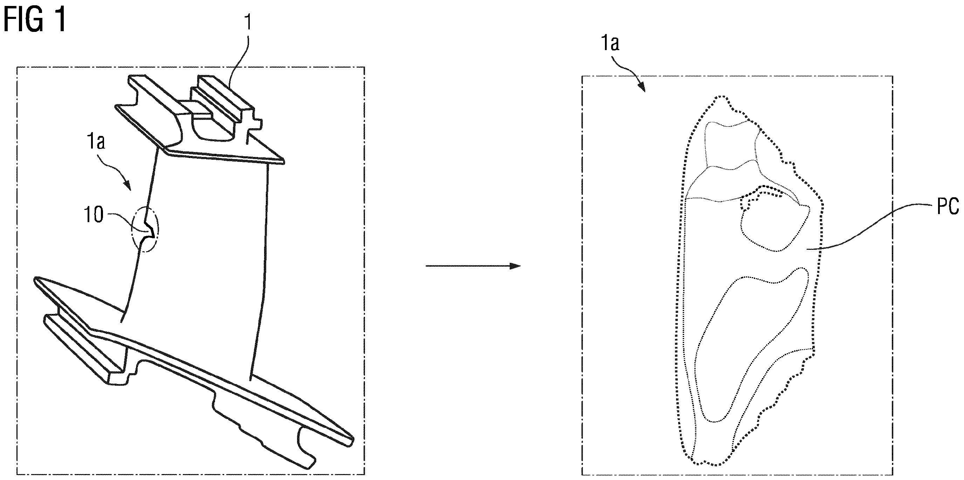

The left-hand side of figure 1 shows a schematic perspective view of a mechanical component 1 with a defect 10 located within a defect area 1a. In this example, the component 1 is a vane of a turbine. The defect 10 is a void, which could be a casting void from the manufacturing process or a void developed during use of the turbine. The component 1 with the defect 10 is to be modelled with the method according to the present invention. According to step b) of the method, a point cloud characteristic of the defect geometry is to be provided. These data can be provided by a physical measurement, e.g. an optical microscope scan or an X-ray CT scan of the defect area 1a. The resulting point cloud PC of the defect 10 from such a scan of the defect area 1a is shown on the right-hand side of figure 1.

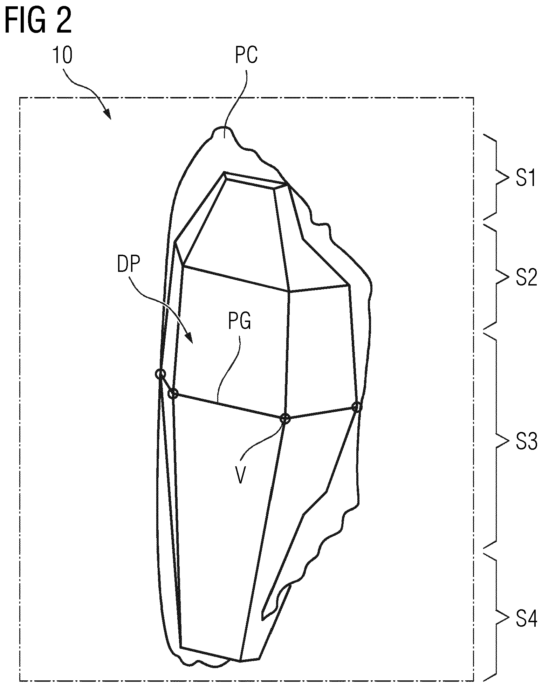

Figure 2 illustrates how a defect polyhedron DP is generated from such a point cloud PC within step c) of the method. In this example, the defect polyhedron DP is obtained by subdividing the point cloud PC into a number of parallel slices, in this case four slices S1 to S4. Each slice comprises a subset of the point cloud PC of the whole defect volume. For each of these subsets, a suitable cross-sectional polygon PG is obtained, which models the shape of the defect volume for the given slice. Each of the two-dimensional polygons is defined by a corresponding mathematical equation. The overall defect polyhedron DP is then obtained by connecting the plurality of parallel cross-sectional polygons PG (in particular by connecting their corresponding vertices). This assembly is also carried out within an implicit representation, in other words by determining a mathematical equation for a three-dimensional scalar function. This scalar function of the three-dimensional spatial coordinates changes its sign at the boundaries of the defect polyhedron DP, thereby unambiguously defining its structure. In the example of figure 2, each of the polygons PG has the same number of vertices V, e.g. six vertices V per polygon PG so that each polygon is a hexagon. The individual hexagons can be irregular (i.e. with different internal angles within each hexagon). But it is favorable if the lines of each hexagon are parallel to the corresponding lines of the other hexagons, as can be seen from the figure for this example. This means that the individual polygons also have corresponding internal angles (though the proportion of the side lengths can still be different and accordingly the shapes of the polygons can also be different).

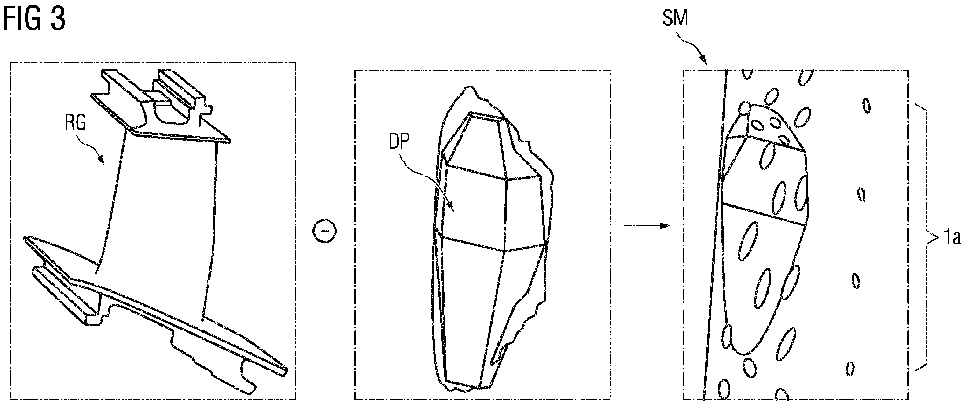

Figure 3 illustrates how in step d) of the method an overall solid model SM of the geometry of the component 1 with the defect 10 is obtained. This overall solid model SM is obtained by subtracting the volume of the defect polyhedron DP from a reference geometry RG. This reference geometry RG corresponds to the ideal target geometry of the component 1 without the damage 10, and the corresponding data set is provided within step a) of the method. This can for example be provided in the form of a CAD data set from the original design of the component. The reference geometry RG is shown in a zoomed-out overall view on the left-hand side of figure 3. The result of the subtraction is shown on the right-hand side as a close-up view for the defect area 1a. It can be seen how the unwanted defect structure (as represented by the subtracted defect polygon DP) is present in addition to some regular voids which are part of the original design. The subtraction step illustrated in figure 3 may optionally be performed within an implicit representation as well. In other words, not just the defect polyhedron DP but also the reference geometry RG and the resulting solid model SM are then available in an implicit format. Alternatively however, the reference geometry RG may be available in a format based on boundary representations or mesh data, and the subtraction can be performed within that format.

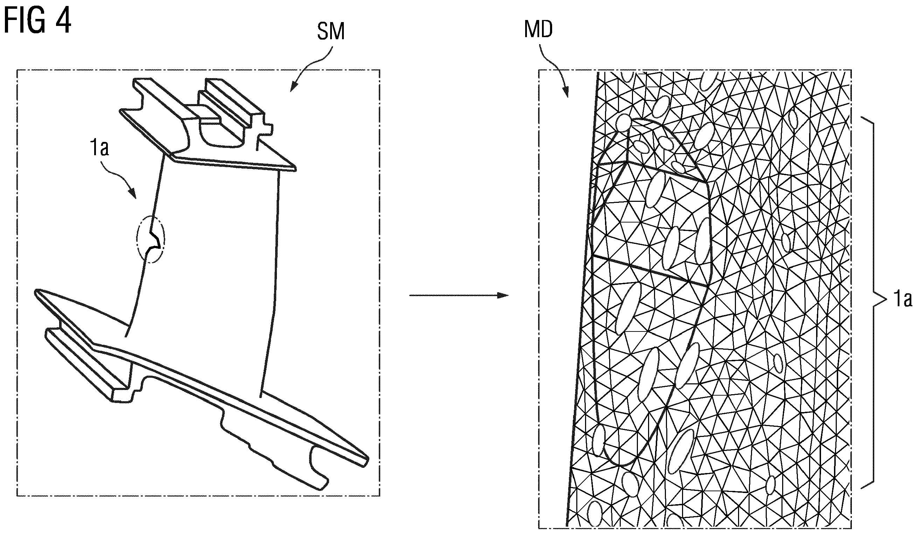

The left-hand side of figure 4 shows an zoomed-out view of the overall solid model SM of the component 10 with the defect 1. The right-hand side of figure 4 shows a close-up of a mesh data set MD for the defect area 1a. This mesh data set MD can be calculated from the solid model SM, e.g. for a given mesh density. Such a mesh data set MD can favorably be used in a subsequent physical simulation step, for example a finite element analysis of mechanical properties of the component 1 with the defect 10.

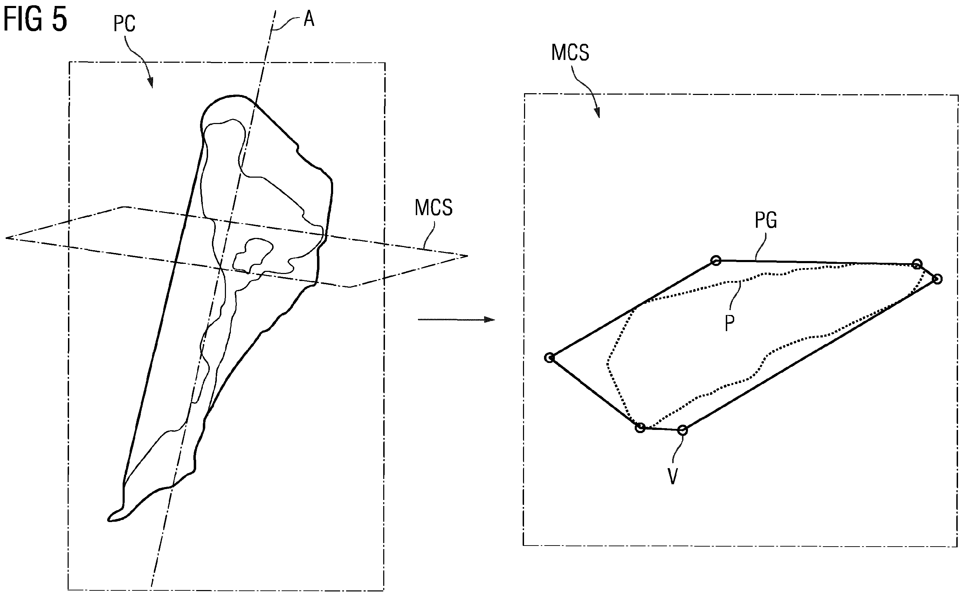

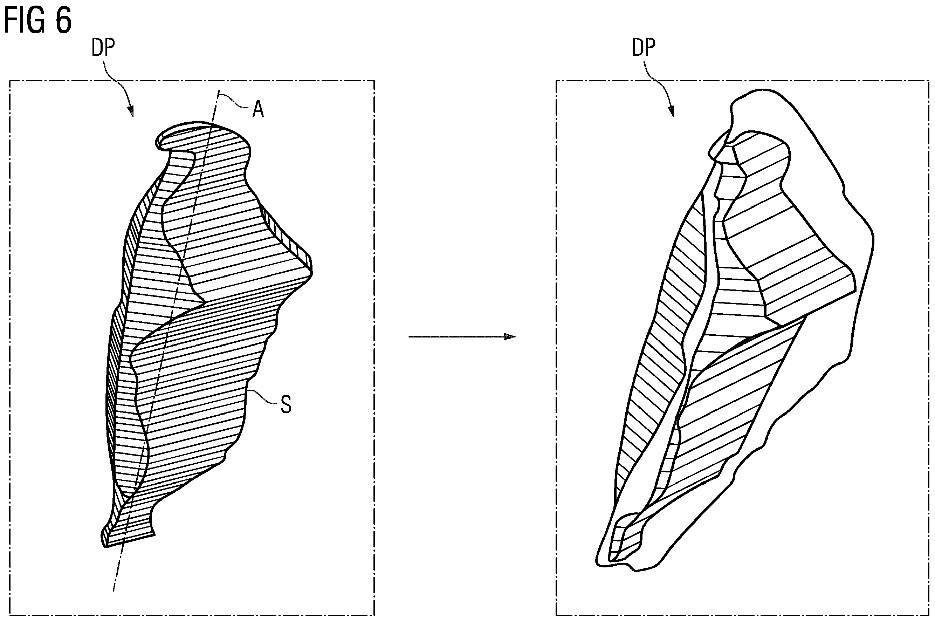

Figures 5 and 6 illustrate step c) for a specific embodiment of the method in somewhat more detail: In this example, again a defect polyhedron DP is derived from the point cloud PC representing the defect geometry. On the left-hand side of figure 5, this point cloud PC is shown schematically. In a first sub-step c1), the longitudinal axis A of the point cloud PC is determined. This is done by calculating the principal axis with the smallest second moment of area for the whole set of points. In a second sub-step c2), the major cross section MCS is determined. This major cross section is the cross sectional slice orthogonal to the longitudinal axis A which has the largest effective area. In other words, this can be the slice with the highest associated second moment of area with respect to the longitudinal axis. The right-hand side of figure 5 shows the projection of all the individual points P from the major cross section MCS of the point cloud PC onto a common plane. In a third sub-step c3), the number of vertices V is set (either automatically or by a user interaction). In this example, this number is again 6 though in other examples the number of vertices V can also be smaller or larger, depending on the complexity of the defect geometry and the required accuracy of modelling it. In a fourth sub-step c4), the cross-sectional polygon PG for the major cross section MCS is determined by an automated algorithm, e.g. by determining the smallest enveloping polygon with the predetermined number of vertices which encompasses either all points P of the major cross section MCS or a predetermined fraction of these points P. The resulting irregular hexagon is shown in the right-hand side of figure 5.

In a preferred embodiment, both the number of vertices V and the angles of the sides of the polygons PG are kept fixed for the whole stack. In other embodiments however, the number and/or the angles can vary between the polygons in the stack. In any case, in a subsequent sub-step c5), the volume with the point could PC is subdivided into a plurality of parallel slices S. These slices can either be equidistant slices of the same thickness, as shown in the example of figure 6, or the distance and thickness can vary as shown in the example of figure 2. In any case, in a following sub-step c6), a cross-sectional polygon PG is determined by an automated algorithm for each of the slices S, in a similar way as described above for the major cross section. The left-hand side of figure 6 shows the final defect polyhedron DP which is obtained by connecting all the individual cross-sectional polygons obtained for the individual slices S. It is to be noted that the above-mentioned specific embodiment is only one favorable way of carrying out step c) of the method. Therefore, it is not necessary that all of the described sub-steps c1) to c6) are carried out in exactly the same way and in the given order. However, it is particularly favorable if step c) comprises at least some of these sub-steps c1) to c6), as described above.

The right-hand side of figure 6 shows a different representation of the resulting defect polyhedron DP, where the wire-model of the polyhedron has been converted to a CAD geometry with the corresponding boundary surfaces.

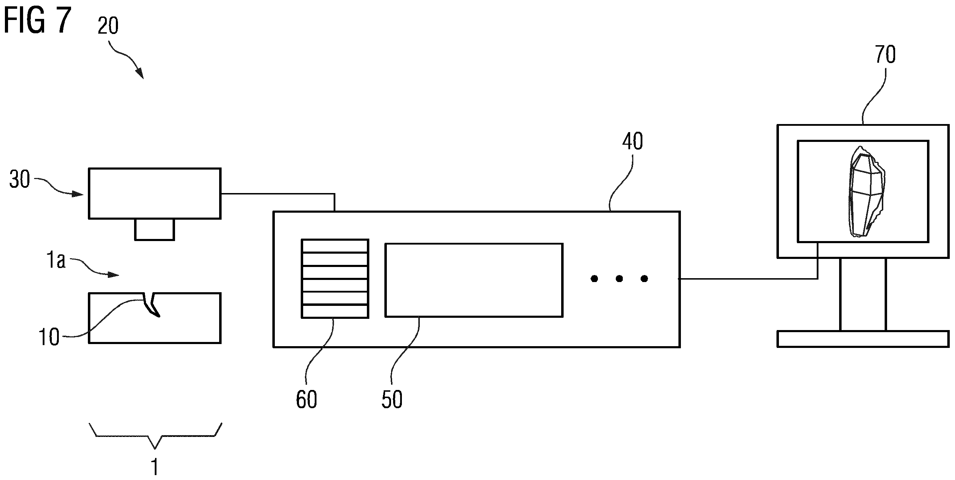

Figure 7 shows a schematic representation of an apparatus 20 which can be used to carry out the method according to one or more embodiments of the invention. This apparatus 20 comprises a computer 40 with a processing unit 50 and a storage unit 60. The processing unit 50 can be used to carry out the above-mentioned computational steps of the method, and the results of the computation as well as any further input and output data and intermediate results can be stored with the storage unit 60. As an optional feature, the apparatus 20 can comprise a measurement unit 30, such as an optical microscope camera or an industrial CT apparatus for scanning the geometry of a defect 10 within a defect area 1a of a component 1. The resulting geometrical data for the defect 10 are then transmitted to the computer 40 for further processing according to the method. As another optional feature, the apparatus 20 comprises a display unit 70 with can be used to display the results of the geometrical modelling of the component 1 with the defect 10 and/or any potential intermediate results to a user.

It is to be noted that independent of the grammatical term usage within the above description, individuals with male, female or other gender identities are included within the term.

### Reference Numerals

- 1: component
- 1a: defect area
- 10: defect
- 20: apparatus
- 30: measurement unit
- 40: computer
- 50: processing unit
- 60: memory unit
- 70: display unit
- A: longitudinal axis
- DP: defect polyhedron
- MCS: major cross section
- MD: mesh data for FEA
- P: point
- PC: point cloud
- PG: cross-sectional polygon
- RG: reference geometry
- S: slice
- S1 to S4: individual slices
- SM: solid model for component with defect
- V: vertex of a polygon

## Claims

1. A method for modelling a component (1), the component (1) having at least one defect (10) within a defect area (1a), wherein the method comprises the following steps:
a) providing a reference data set with a reference geometry (RG) for a reference component without the defect (10),
b) providing a point cloud (PC) characteristic of the geometry of the defect (10),
c) generating a defect polyhedron (DP) from the point cloud (PC), the defect polyhedron (DP) approximating the volume of the defect (10), wherein the defect polyhedron (DP) is an implicit representation of the defect (10), defined by a scalar field, in particular a distance field, and
d) deriving a solid model (SM) for the component (10) by subtracting the defect polyhedron (DP) from the reference geometry (RG).

2. The method according to claim 1, wherein the reference data set provided in step a) is provided
- either as an implicit representation of the reference geometry (RB)
- or as CAD data set comprising boundary representations, wire-frame, surface, volume and/or mesh data, in particular wherein the CAD data set is converted to an implicit representation of the reference geometry (RG) in a subsequent step.

3. The method according to claim 1 or 2, wherein the point cloud (PC) provided in step b) is obtained from a physical measurement on the defect area (1a) of the component (10) to be modelled or of a similar component.

4. The method according to any of the preceding claims,
- wherein the generation of the defect polyhedron (DP) in step c) comprises subdividing the point cloud (PC) into a plurality of parallel slices (S),
- wherein for each slice (S) a cross-sectional polygon (PG) is determined and
- wherein the defect polyhedron (DP) is obtained from connecting the cross-sectional polygons (PG) from the individual slices (S).

5. The method according to claim 4, wherein the number of slices (S) is between 2 and 1000, in particular between 2 and 100.

6. The method according to claim 4 or 5, wherein the number of vertices (V) of the individual cross-sectional polygons (PG) is between 3 and 30.

7. The method according to claim 5 or 6, wherein the parallel slices (S) are orthogonal to the longitudinal principle axis (A) of the point cloud (PC).

8. The method according to any of claims 5 to 7, wherein each cross-sectional polygon (PG) is a planar polygon representing an envelope of the fraction of the point cloud (PC) within the respective slice (S).

9. The method according to claim 8, wherein each cross-sectional polygon (PG) has a convex shape.

10. The method according to any of the claims 5 to 9, wherein the overall defect polyhedron (DP) has the freedom to comprise one or more concave portions.

11. The method according to any of the preceding claims, which comprises the additional step
e) performing a simulation of one or more mechanical properties of the component (10) based on the solid model (SM) derived in step d), in particular by using a discrete mesh derived from the solid model (SM).

12. The method according to claim 11, wherein the result of the simulation is used to predict the residual lifetime of the component (10) and/or to plan a subsequent repair of the component (10) and/or to assist a decision during the design of the component (10).

13. The method according to any of the preceding claims, wherein the component (10) is a component of a turbine, in particular a blade or vane of a turbine.

14. An apparatus (20) for modelling a component (10), the apparatus (20) comprising a processing unit (50) and a memory unit (60) communicatively coupled to the processing unit (50), wherein the apparatus (20) is configured to perform the method according to any of the preceding claims.

15. A computer program product with program code, which is stored on a machine-readable carrier, for carrying out a method according to any of the claims 1 to 13 when the program code is executed on a computer.
